Europäisches Patentamt

European Patent Office

Office européen des brevets

(19)

(11) Publication number: **0 311 148**
**A2**

# (12) EUROPEAN PATENT APPLICATION

(21) Application number: **88118885.8**

(22) Date of filing: **05.02.86**

(51) Int. Cl.⁴: **G08B 13/18**

(30) Priority: **19.02.85 GB 8504168**
**22.03.85 GB 8507505**
**21.11.85 GB 8528719**

(43) Date of publication of application:
**12.04.89 Bulletin 89/15**

(60) Publication number of the earlier application in accordance with Art.76 EPC: **0 200 289**

(84) Designated Contracting States:
**DE FR IT NL SE**

(71) Applicant: **UNITED KINGDOM ATOMIC ENERGY AUTHORITY**
**11 Charles II Street**
**London SW1Y 4QP(GB)**

(72) Inventor: **Edwards, Stanley Alfred**
**58 Broadway Avenue**
**Wallasey Merseyside L45 6TD(GB)**
Inventor: **Hunt, Robert**
**72 Glendower Crescent**
**Orpington Kent BR6 0UR(GB)**
Inventor: **Lobb, Daniel Richard**
**25 Marlings Park Drive**
**Chislehurst Kent, BR7 6QN(GB)**

(74) Representative: **Neukom, John Ulysses et al**
**Patents Branch United Kingdom Atomic Energy Authority 11Charles II Street**
**London SW1Y 4QP(GB)**

(54) Apparatus for monitoring infra-red emissions.

(57) The apparatus has an infra-red sensor (88) which by means of a rotary scanning head (74) is provided in continuously repeated cycles with an overall field of view encompassing an area under surveillance. Included in an optical system (90 to 94) associated with the scanning head is an anamorphic lens (90) by which to enlarge, with a ratio of its wide and narrow angles of view of up to as much as 220:1, the field of view in a direction perpendicular to the plane of rotation of the scanning head.

EP 0 311 148 A2

## Apparatus for monitoring infra-red emissions

This invention relates to the monitoring of infra-red emissions.

Commercial infra-red sensors currently available, for instance those employing infra-red sensitive lead selenide, cadmium mercury telluride or lead tin telluride materials, exhibit rapid response times to variations in levels of emitted radiation and may be of the quantum detector type in which the band gap energy is less than the photon energy of emitted radiation. Such detectors may be photovoltaic or photoconductive and may be provided with a cooling device for cooling the detector to cryogenic temperature so as to increase sensitivity.

According to the invention, apparatus for monitoring infra-red emissions comprises sensor means responsive to infra-red radiation for producing an electrical output related to the intensity of infra-red radiation incident thereon, scanning means for effecting a cyclical scan to provide the sensor means, in use of the apparatus, repeatedly with an overall field of view encompassing an area under surveillance, said scanning means including an anamorphic lens for providing said sensor means with a refracted instantaneous field of view which is scanned in a direction generally orthogonal to its wide angle of view to provide the sensor means with said overall field of view, means for analysing the outputs of the sensor means with reference to a predetermined threshold value or values to detect within said overall field of view arising sources of infra-red radiation representing potentially hazardous conditions, and means for generating an actuating signal in the event of detection of such sources.

Where a single detector is employed, this may be mounted for scanning movement, eg it may be mounted for continuous rotation or rotational indexing.

Alternatively, the detector may be associated with an optical system arranged to present different fields of view in succession to the detector.

Where multiple detectors are used, these may also be scanned or, alternatively, they may be stationary but oriented so that each sees a different field of view.

If desired, the detector(s) may be associated with a filter or filters for restricting the frequency band-width of radiation incident upon the detector(s).

The apparatus may also be provided with at least one controllable source of infra-red radiation, eg a high intensity lamp, which may be operated selectively and is located within the field(s) of view of the detector(s) to enable checking of the proper functioning of the detector(s).

In a preferred embodiment of the present invention there is provided a means for storing a reference infra-red radiation profile for the overall field of view produced by the cyclic scan, and means for comparing the outputs produced by said sensor means during each scan cycle with the stored reference profile whereby localised changes in the level of infra-red emission within said field of view can be detected.

The reference profile may be derived from the sensor means by performing scanning of the area under surveillance in circumstances when any potential hazard is known not to exist.

The reference profile may be of a volatile nature in the sense that it may be varied to take into account for example diurnal variations in temperature within the area under surveillance. Thus, for instance, the system may be arranged to update the stored reference profile by performing a reference scan at predetermined intervals (eg after each set of N scanning cycles where N is an integer greater than 1), the updated reference profile thereafter being used as the basis for comparison with the outputs of the sensor means produced during subsequent scanning cycles.

The reference profile is conveniently stored in digitalised form, ie a large number of discrete digital values each associated with a respective incremental zone or "pixel" of the overall field of view. Thus, during scanning, the sensor means views the overall field of view as a cyclic sequence of incremental zones and the output(s) produced by the sensor means while viewing each such incremental zone can be compared, either instantaneously or subsequently, with the corresponding digital value of the reference profiles.

The apparatus preferably includes threshold means for discriminating between those deviations from the reference profile which are attributable to non-hazardous fluctuations in the level of infra-red radiation detected (which will tend to vary slowly with time) from those which are attributable to potentially hazardous sources. The threshold means may discriminate on the basis of changes in magnitude above and/or magnitude changes coupled with rate of change.

Typically the overall field of view seen by the sensor means will be 360 degrees in the horizontal plane and at least 120 degrees in the vertical plane.

Other features and aspects of the invention will become apparent from the embodiments described by way of example only with reference to the accompanying drawings, in which:

Figure 1 is schematic partly vertically-sectioned view showing a hot spot monitoring arrangement having a scanning facility;

Figure 2 is a circuit block diagram of signal processing circuitry for use with the arrangement of Figure 1;

Figure 3 is a circuit diagram corresponding to one of the timing circuits illustrated in the block diagram of Figure 2; and

Figure 4 is a block diagram of alternative signal processing circuitry for use with the scanning arrangement of Figure 1.

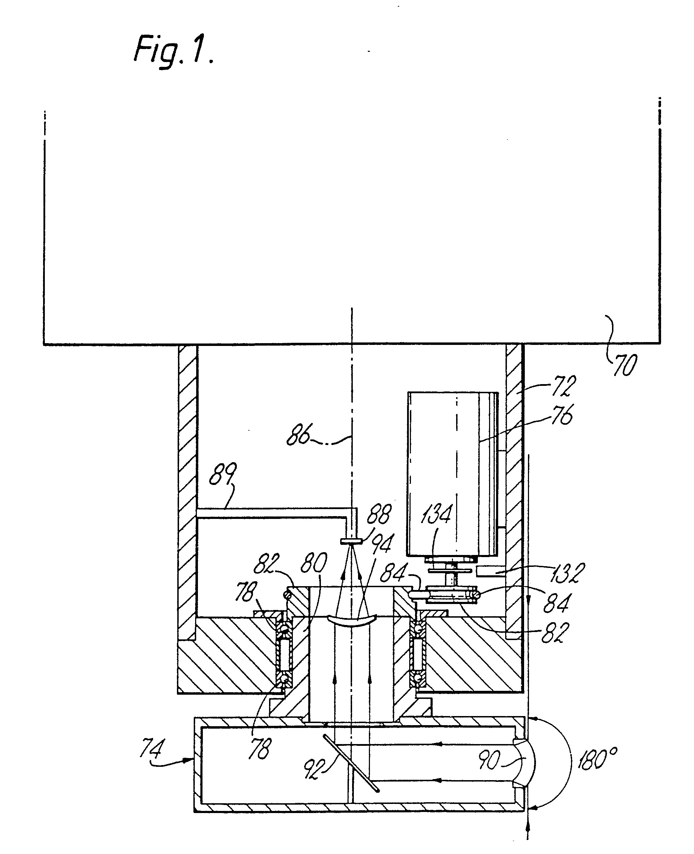

The scanning facility of Figure 1 comprises a fixed upper housing 70, a fixed lower housing 72 and a scanning head 74. The upper housing 70 may accommodate electronic circuitry (to be described below) and power supply circuitry for the electronics and an electric drive motor 76 housed within the lower housing 72. The base of the lower housing 72 rotatably mounts, via bearings 78, a tubular shaft 80 to the lower end of which the scanning head 74 is secured. The motor 76 and the shaft 80 are coupled by a belt and pulley drive 82,84 so that the scanning head can be scanned around the axis 86.

An infra-red sensor 88, eg a lead selenide cell, is mounted along the axis 86 by arm 89 which may be fixed to the lower housing 72 as shown or may be connected to the driven pulley 82 or shaft 80. Infra-red radiation from the surroundings is collected by an optical system and focussed on the sensor 88. Thus, as illustrated, the optical system comprises a wide angle lens 90 arranged so that its wide angle of view extends in a plane which contains or is parallel to the axis 86, a beam-folding mirror 92 and a focussing lens 94 all mounted for rotation with the scanning head 74 (although it is not essential for the lens 94 to rotate with the scanning head). The lens 90 is a cylindrical anamorphic lens and the optical system comprising sensor 88, lenses 90 and 94 and mirror 92 may have an instantaneous field of for example $180° \times 1°$, ie $180°$ in a vertical plane and $1°$ in a horizontal plane. It should be understood that these values are merely given by way of example and may vary according to requirements; for instance it is envisaged that the angle subtended in the vertical plane may range from $90°$ to $220°$ depending on requirements. The sensor 88 is located at the focal surface of lens 94 so that, in the horizontal section in which lens 90 has no power, the sensor 88 and lens 94 define the horizontal field angle of the instantaneous field as w/f radians (where w is the width of the sensor and f is the focal length of lens 94). The lens 90 has the effect of extending the range of angles from which radiation reaches the sensor, in the vertical section, to $180°$. As the scanning head 74 rotates (typically at a speed giving at least one complete scan per second), the field of view provided by the optical system is passed through $360°$ thereby giving a very extensive overall field of view, ie $360°$ in a horizontal plane and, in the illustrated embodiment, $180°$ in a vertical plane.

In many situations, a single scanning arrangement such as that shown in Figure 1 will suffice; however, if needed to provide adequate coverage, an additional scanning arrangement or arrangements as illustrated in Figure 1 may be provided so that the scanning arrangements collectively provide coverage of all potentially vulnerable surfaces. In the embodiment illustrated in Figure 1, the cylindrical lens 90 subtends $180°$ in a vertical plane but a lesser angle may be adequate for some applications in which only certain surfaces are vulnerable and in this event the lens 90 may be masked to limit the viewing angle as required.

The scanning speed is controllable by the motor 76 and, if desired, may be selectively variable by varying the motor speed, eg by way of operator-actuable controls. The speed of scanning will in turn govern the degree of temperature resolution achievable, ie the slower the scanning speed the higher the temperature resolution achievable. By permitting variation in scanning speed, the monitoring equipment can be used both for rapidly detecting hot spots (in which case, high scanning speeds are appropriate) and detecting other conditions leading to less substantial increases in infra-red radiation emission (in which case, slower scanning speeds are appropriate). Thus, for example, the presence of personnel can be detected by virtue of the level of infra-red radiation emitted and such radiation levels can be detected with the aid of slower scanning speeds. If necessary, two scanning arrangements may be employed which operate at scanning speeds compatible with hot spot and personnel detection respectively (using different threshold levels for radiation detection) so that if either scanning arrangement registers the condition monitored, ie development of a hot spot or presence of personnel, appropriate action is initiated accompanied by generation of an alarm signal. Alternatively, as described hereinafter, the same scanning arrangement may be used to monitor both types of condition. Typically the fast scan rate will be greater than one complete scan per second and may be of the order of a scan every 100 milliseconds, while the slow scan rate may be of the order of several seconds.

Figure 5 illustrates diagrammatically electronic circuitry for processing the outputs of the sensor 88. The sensor 88 is connected to a pre-amplifier circuit 96 and the amplified output is connected to one input of a level comparator 98 having a second input connected to a circuit 100 providing a reference threshold value which may be selectively variable and will in general be preset to a value corresponding to the maximum infra-red emissions acceptable, ie so that a hot spot is readily distinguishable from normal background levels of infrared emission. If the input from the sensor 88 exceeds the preset threshold value, the comparator 98 provides an output which is fed to two timing circuits 102, 104 which function to trigger, via respective outputs 106, 108, a circuit 110 for generating an alarm signal in the event either of an undesirable hot spot being detected or of malfunctioning of the sensor 88 or electronics. The circuit 110 also initiates, via output 112, an actuating signal as appropriate.

The safeguard against malfunctioning of the sensor 88 or electronics is implemented by deliberately providing a hot reference source 114 at a known position within the overall field of view traversed during each scan. For example, a hot spot constituted by an electrical resistance-heated component may be located at a suitable vantage point so that the sensor 88 sees the reference hot spot 114 once on every scan. The two timing circuits 102, 104 operate in conjunction to discriminate between the reference hot spot 114 and any undesirable hot spots. In addition, the timing circuit 102 establishes that the reference hot spot is actually seen by the sensor 88 during each and every scan. The timing circuit 102 may comprise a retriggerable monostable having a time-out period exceeding the scanning period so that, provided the reference hot spot is detected during each scan, it is repeatedly retriggered (without timing out) by the outputs produced by comparator 98 in response to the reference hot spot. If, however, circuit 102 does time out this indicates failure to detect the reference hot spot within a scan cycle and hence initiates generation of the actuating signal. If desired, circuit 102 may be arranged so that an output to circuit 110 is provided only if the reference hot spot fails to be detected on two or more occasions in successive scan cycles (or for example during two out of three scan cycles).

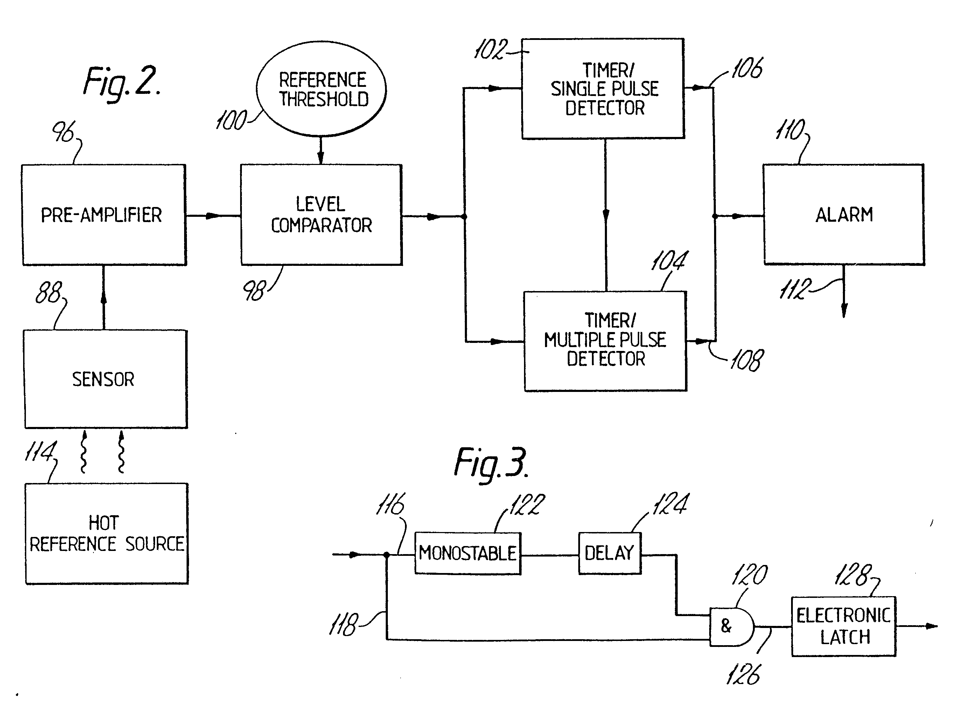

The timing circuit 104 may include a monostable triggered by the signal derived from the reference hot spot 114 and having a time out period slightly less than the scanning period and may be arranged to be armed during this timing period so as to detect hot spots other than the reference. Thus, for example, the timing circuit 104 may be implemented, in principle, in the manner indicated in Figure 3. The output from the comparator 98 is fed via lines 116, 118 to monostable 122 and one input of an AND gate 120. On being triggered, the monostable 122 maintains an output for its timing period at the second input of AND gate 120, the monostable output being delayed by delay circuit 124 to stop the triggering pulse arriving substantially simultaneously at gate 120 via the two routes so that gate 120 does not give a spurious coincidence output on line 126 at this stage. If a second hot spot is not detected within the timing period of monostable 122 the latter times out, removes the output applied at the second input of gate 120 and awaits retriggering by the next pulse derived from the reference hot spot 114. If however a second hot spot is detected before monostable 122 times out, the resulting pulse will be routed to the first input of gate 120 via line 118 and the resulting coincidence of pulses at both inputs of gate 120 will produce an output on line 126 which is effective to operate electronic latch 128 and provide a signal for initiating operation of the alarm/disabling initiating circuit 110. It will be seen that the reference hot spot 114 serves to trigger both circuits 102, 104 once per cycle and therefore, in addition to providing a self-testing facility for the sensor and circuitry, provides a timing reference signal for synchronising purposes and enables any significant changes in the scanning speed to be detected for instance as a result of slippage in the pulley/belt coupling between the motor 76 and shaft 80. In this event, sighting of the reference hot spot will be shifted relative to the timing periods of the timing circuits 102, 104 and if the shift is large enough, the circuits 102, 104 will indicate a malfunction.

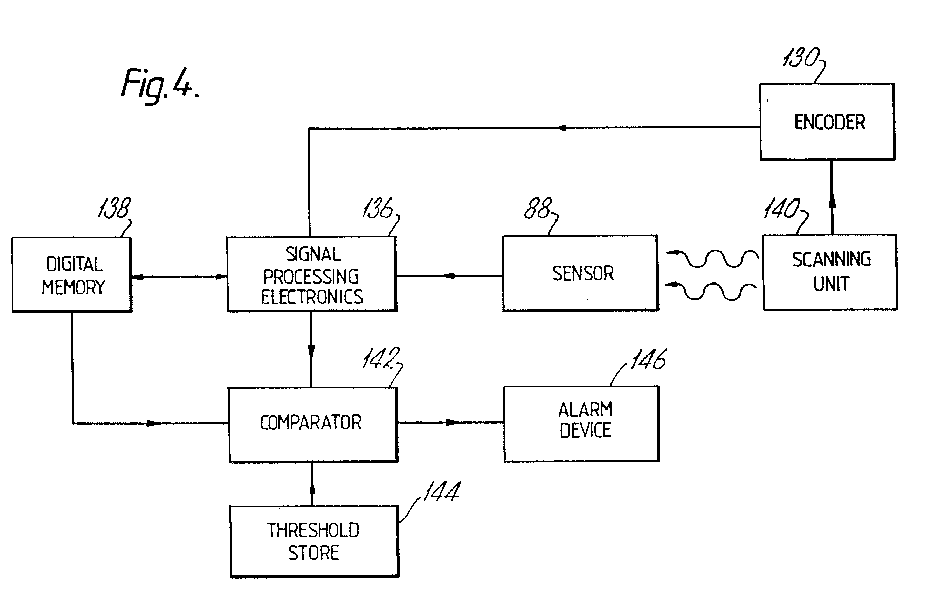

The scanning arrangement of Figure 1 may be used in conjunction with sampling-type electronic circuitry to obtain greater flexibility in monitoring of infra-red emissions. One implementation of such circuitry is shown schematically in Figure 4. A position encoder 130 is associated with the scanning unit of Figure 4 (here depicted by reference numeral 140) to provide an electrical output representative of the instantaneous point reached during each scanning cycle. The encoder 130 may comprise a proximity detector or opto-electronic switch 132 co-operable with a toothed disc 134 (see Figure 4) carried by the drive shaft of the motor 76 so that the proximity detector or opto-switch provides a series of for example 256 pulses during each scanning cycle. The encodes may be responsive to rotation of the scanning head per se if desired so as to eliminate errors such as drive belt slip.

The outputs of the sensor 88 and encoder are fed to signal processing electronics 136 which may be microprocessor based. A digital memory 138 serves to store a reference temperature profile for the overall field of view under surveillance, the store being loaded with a digital value associated with a respective one of the series of instantaneous fields (eg 256 such values) produced during scanning. During surveillance, the output produced by the sensor 88 is repeatedly sampled (eg 256 times per cycle) and in fed to a comparator 142 along with the corresponding reference value from the memory 138 and, if the difference exceeds a predetermined threshold derived from threshold store 144 during any scan or more than once in two or more scans, a device 146 is operated for initiating the actuating signal.

Typically, the scanning period will be of the order of one second or less and the interval between production of an ouput by the detector and operation of the warning device may be less than one second. Thus, appropriate remedial action can be taken rapidly before any hazard develops.

As a safety measure, as described with reference to Figure 3, a reference hot spot may be secured to a suitable fixture within the field of view (ie on a wall or other structure) to provide a self-check facility for the scanning unit. Thus, the reference "hot spot" should be sighted by the scanning unit at a particular point in each scan and failure to sight the reference "hot spot" may be used to initiate a warning signal. The reference "hot spot" also provides a geographical reference point within the scanning field to facilitate the identification of particular discrete zones or areas at which an alarm condition may be detected.

The reference temperature profile collectively provided by the digital values stored in the memory 138 may be obtained by initially using the scanning unit 140 to scan the area under surveillance in circumstances where any potential hazard is known not to exist. Thus, the output of sensor 88 can be sampled for each increment in the overall scan and the values obtained may be entered at appropriate addresses in the memory 138 for retrieval at corresponding points in subsequent scans and hence for comparison by comparator 142 with the sampled outputs then prevailing for each such position.

The threshold store 144 may contain more than one threshold value so that, in the course of comparisons made by the comparator 142, different threshold values may be used for different sampling positions during the scan. The reference profile stored by memory 138 may if desired be updated by the signal processing electronics 136 at regular intevals by substituting the currently derived sample values for the previously stored values. Such updating can be effected each time a scan is executed but will more usually be effected at longer intervals, eg once every 60 minutes.

The signal processing electronics may process the sampled outputs from the sensor 88 in two modes. In a first mode, the samples may be compared individually with corresponding stored reference values so that the circuitry can respond immediately to any large temperature variations resulting from the development of a hot spot. In a second mode which affords a higher degree of temperature resolution, the sampled outputs may be analysed using an averaging technique whereby the samples are averaged over a relatively prolonged interval of time compared with the sampling interval and, in this mode, the comparator 142 may be operable to compare the averaged value with a relatively low threshold value derived from store 144, for example in order to detect sources other than hot spots. For instance, in the second mode (which, in effect, simulates a slower scanning rate) the unauthorised presence of personnel may be detected and, in this event, appropriate action can be taken involving for example generation of an alarm.

Although shown mounted from above, the scanning arrangements described above may for example be mounted by means of a slender column or pole secured to the floor or other convenient mounting surface.

## Claims

1. Apparatus for monitoring infra-red emissions comprising sensor means responsive to infra-red radiation for producing an electrical output related to the intensity of infra-red radiation incident thereon, scanning means for effecting a cyclical scan to provide the sensor means, in use of the apparatus, repeatedly with an overall field of view encompassing an area under surveillance, said scanning means including an anamorphic lens for providing said sensor means with a refracted instantaneous field of view which is scanned in a direction generally orthogonal to its wide angle of view to provide the sensor means with said overall field of view, means for analysing the outputs of the sensor means with reference to a predetermined threshold value or values to detect within said overall field of view arising sources of infra-red radiation representing potentially hazardous conditions, and means for generating an actuating signal in the event of detection of such sources.

2. Apparatus as claimed in Claim 1 including means for testing said sensor means, said testing means being operable to suppress said actuating signal only in response to detection of a source(s) by said analysing means within a predetermined zone or zones of the scanned field of view whereby said actuating signal is generated only in response to potentially hazardous sources lying outside said predetermined zone(s).

3. Apparatus as claimed in Claim 1 or 2 in which the scanning means is operable selectively to effect scanning at different speeds.

4. Apparatus as claimed in any one of Claims 1-3 in which said analysing means is arranged to derive from the sensor means a series of output signals corresponding to successive instantaneous fields of view and is operable to analyse said output signals both individually and groupwise to provide different degrees of temperature resolution.

5. Apparatus as claimed in any one of Claims 1-4 in which said analysing means includes means for repeatedly sampling the output of the sensor means in the course of each scanning cycle to produce a predetermined number of sampled signals each corresponding to successive instantaneous fields of view, store means storing a number of reference signals each corresponding to a respective one of said successive instantaneous fields of view and collectively forming a reference radiation profile for the overall field of view, and means for comparing each sampled signal with the associated stored reference signal to determine whether or not the difference therebetween exceeds the threshold value or a respective threshold value.

6. Apparatus as claimed in Claim 5 in which the stored reference profile is periodically updated using the profile obtained in the course of a scanning cycle.

7. Apparatus as claimed in Claim 6 in which said updating is effected after each set of N scanning cycles, where N is an integer greater than or equal to 1, by substituting the stored reference signals by respective sampled output signals.

8. Apparatus as claimed in any one of Claims 1-7 in which the ratio of the wide and narrow angles of the instantaneous field of view subtended by said anamorphic lens is at least 50 : 1.

9. Apparatus as claimed in Claim 8 in which said ratio is in the range from 120 : 1 to 220 : 1.

10. Apparatus as claimed in Claim 8 or 9 in which the wide angle of the instantaneous field of view subtended by said anamorphic lens is in the range of 90° to 220°.

Fig.1.

EP 0 311 148 A2

*Fig.2.*

REFERENCE THRESHOLD *100*

PRE-AMPLIFIER *96*

LEVEL COMPARATOR *98*

TIMER/ SINGLE PULSE DETECTOR *102*    *106*

TIMER/ MULTIPLE PULSE DETECTOR *104*    *108*

ALARM *110*    *112*

SENSOR *88*

HOT REFERENCE SOURCE *114*

*Fig.3.*

*116*    MONOSTABLE *122*    DELAY *124*

*118*    & *120*    ELECTRONIC LATCH *128*

*126*

## Fig.4.

ENCODER *130*

DIGITAL MEMORY *138*

SIGNAL PROCESSING ELECTRONICS *136*

SENSOR *88*

SCANNING UNIT *140*

COMPARATOR *142*

ALARM DEVICE *146*

THRESHOLD STORE *144*

EP 0 311 148 A2